# EUROPÄISCHE PATENTSCHRIFT

(11) **EP 1 101 667 B1**
(45) Veröffentlichungstag und Bekanntmachung des Hinweises auf die Patenterteilung: **02.01.2004**
(21) Anmeldenummer: 00124126.4
(22) Anmeldetag: 07.11.2000
(51) Int. Cl.: B60R 22/46, B60R 21/26, B60R 21/01

(54) **Zünder**
Igniter
Allumeur

(30) Priorität: 22.11.1999 AT 197899
(43) Veröffentlichungstag der Anmeldung: 23.05.2001
(73) Patentinhaber: Hirschmann Austria GmbH, 6830 Rankweil (AT)
(72) Erfinder: Schmid, Günther, 6840 Götzis (AT); Fabing, Helmut, 6830 Rankweil (AT)
(74) Vertreter: Hefel, Herbert, Dipl.-Ing.

(56) Entgegenhaltungen:
- EP-A- 0 805 074
- WO-A-00/09366
- DE-A- 19 712 314
- DE-A- 19 856 325
- DE-C- 19 610 799

## Beschreibung

Die Erfindung betrifft einen Zünder zum Auslösen eines Rückhaltemittels, insbesondere eines Gurtstraffers oder Airbags, in einem Kraftfahrzeug, der im Bereich seines vorderen Endes eine Anzündeinrichtung wie eine Zündpille oder einen in einer mit Pulver befüllten Pulverkammer angeordneten Zündwiderstand sowie elektronische Bauteile umfaßt, die auf einem MID-Träger angeordnet sind.

Ein in einer Antriebsvorrichtung eines Rückhaltemittels eines Kraftfahrzeuges eingebauter Zünder ist beispielsweise aus der AT 000 522 U1 bekannt. Zur Verhinderung von Fehlzündungen sind bei diesem Zünder elektronische Bauteile, insbesondere Induktivitäten vorgesehen, die mit den Zuleitungsdrähten des Zünders zur Zuführung der Zündenergie frei verlötet sind und in Kunststoff eingespritzt oder eingegossen sind. Bei den verwendeten elektronischen Bauelementen handelt es sich um relativ robuste Bauteile wie Induktivitäten.

Aus der DE-A-19610799 ist weiters ein Zünder der eingangs genannten Art bekannt, bei dem auch Halbleiterbauelemente in der Form von integrierten Schaltkreisen verwendet werden. Die elektronischen Bauteile können dabei auf einem MID-Träger (MID = "molded interconnect device") montiert sein. Solche Träger werden beispielsweise in einem zweistufigen Spritzgußverfahren hergestellt, wobei ein Grundkörper aus einer ersten Kunststoffkomponente mit einer weiteren Kunststoffkomponente umspritzt wird und eine der beiden Kunststoffkomponenten über einen elektrochemischen Galvanisierungsprozeß mit einer oberflächlichen Metallisierung versehbar ist, während die andere der beiden Kunststoffkomponenten keine solche galvanische Metallisierung annimmt. Die galvanischen Metallisierungen dienen zur Ausbildung von Leiterbahnen, welche auf den MID-Träger aufzubringende elektronische Bauteile kontaktieren und verbinden. Beim Ausführungsbeispiel, bei welchem der Zünderkörper von einem MID-Träger gebildet wird, sind Kontaktstifte ebenso wie Zündanschlußstifte jeweils zumindest teilweise in den MID-Träger eingebettet und dadruch unlösbar mit diesem verbunden.

Auch andere Verfahren zur Herstellung von MID-Trägern sind bekannt, z. B. sogenannte "Fotoimaging-Techniken" oder "Film-Techniken". Diese Techniken sind beispielsweise in den Proceedings of 3. International Congress "Molded Interconnect Devices", 23. - 24.09.98, Erlangen, Germany (ISBN 3-87525-111-3) beschrieben. Jeweils werden an gespritzten Grundkörpem Leiterbahnen angeordnet.

Aufgabe der Erfindung ist es, einen verbesserten Zünder der eingangs genannten Art bereitzustellen, dessen Herstellung gegenüber dem aus der DE-A-19610799 bekannten Zünder vereinfacht ist. Erfindungsgemäß gelingt dies durch einen Zünder mit den Merkmalen des Patentanspruchs 1.

Beim erfindungsgemäßen Zünder werden somit der oder die Anschlußstift/e zur Kontaktierung des Zünders bei der Herstellung des MID-Träger mitgespritzt und werden mit entsprechenden galvanischen Metallisierungen versehen, welche die Kontaktflächen bilden.

In einer bevorzugten Ausführungsform des erfindungsgemäßen Zünders wird weiters zumindest ein Teil der Wandung der Pulverkammer ebenfalls bei der Herstellung des MID-Trägers mitgespritzt und ist einstückig mit diesem ausgebildet.

Zur Fertigstellung des Zünders wird vorteilhafterweise - gegebenenfalls nach dem Aufbringen einer Vergußmasse auf die elektronischen Bauteile - eine weitere Kunststoffkomponente an den MID-Träger angespritzt. Diese weitere Kunststoffkomponente kann von einer Kunststoffweichkomponente gebildet sein, von der eine um den äußeren Umfang des Zünders umlaufende Dichtungswulst gebildet wird.

Weitere Vorteile und Einzelheiten der Erfindung werden im folgenden anhand der beiliegenden Zeichnung erläutert. In dieser zeigen:
- Fig. 1: einen schematischen Längsschnitt durch ein erstes Ausführungsbeispiel der Erfindung;
- die Fig. 2 bis 5: vergrößerte Darstellungen des MID-Trägers des Zünders von Fig. 1 in einer perspektivischen Ansicht von schräg oben, in einer Rückansicht, in einer Draufsicht und in einer Vorderansicht;
- die Fig. 6 bis 8: verschiedene Stufen des Herstellungsprozesses des Zünders von Fig. 1 in einer perspektivischen Ansicht entsprechend der Fig. 2;
- die Fig. 9 und 10: schematische Längsschnitte durch weitere Ausführungsbei spiele der Erfindung;
- die Fig. 11 und 12: weitere Ausführungsformen von Anschlußstiften des Zünders.

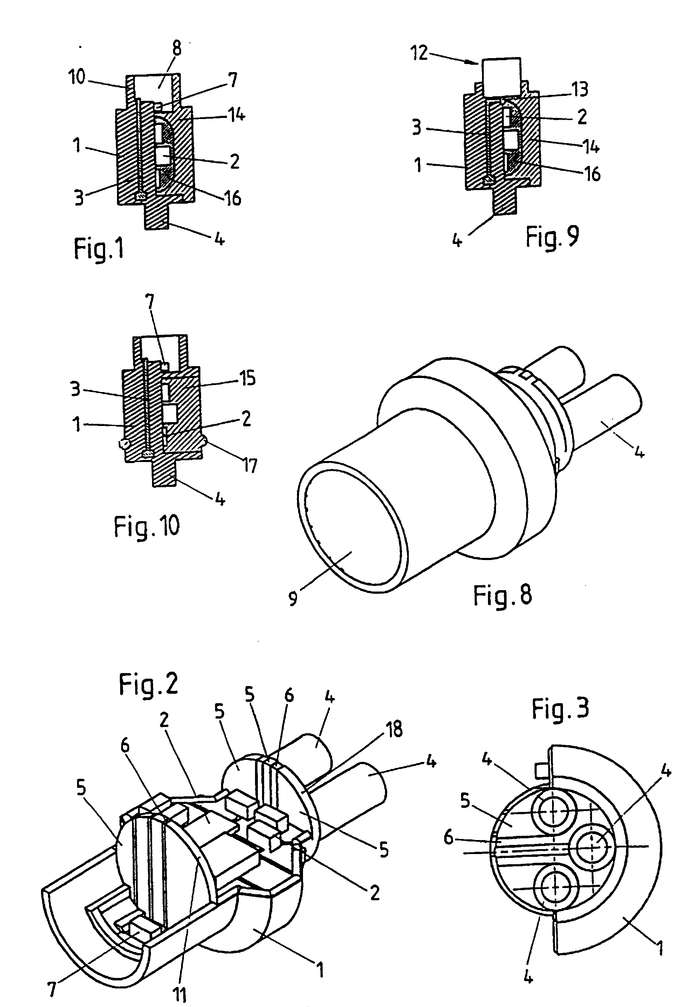

Der in den Fig. 1 bis 8 dargestellte erfindungsgemäße Zünder weist einen MID-Träger 1 auf, auf dem elektronische Bauteile angeordnet sind, von denen einige mit dem Bezugszeichen 2 versehen sind. Diese elektronischen Bauteile 2 umfassen u.a. Halbleiterbauelemente in der Form von integrierten Schaltkreisen. Auf diese Weise kann eine Buselektronik ausgebildet werden zum Anschluß des Zünders an ein Datenbussystem, Ober welches Befehle zum Auslösen des Zünders übertragbar sind.

Der MID-Träger 1 nach dem gezeigten Ausführungsbeispiel umfaßt zumindest zwei Kunststoffkomponenten, die in einem zweistufigen (bzw. mehrstufigen) Spritzgußverfahren aneinander angespritzt sind. Eine der Kunststoffkomponenten ist über einen elektrochemischen Galvanisierungsprozeß an ihrer Oberfläche mit einer Metallisierung versehbar. Diese metallisierten Bereiche können zur Ausbildung von Leiterbahnen verwendet werden, welche die elektronischen Bauteile 2 kontaktieren und entsprechend miteinander verbinden. Eine weitere Kunststoffkomponente ist über diesen elektrochemischen Galvanisierungsprozeß nicht metallisierbar und bildet isolierende Bereiche an der Oberfläche des MID-Trägers aus, welche beispielsweise zwischen den durch die galvanischen Metallisierungen gebildeten Leiterbahnen liegen. Mehrere metallisierte Bereiche bzw. isolierende Bereiche auf der Oberfläche des MID-Trägers sind in den Figuren mit den Bezugszeichen 5 bzw. 6 versehen.

An der Rückseite des Trägers sind Anschlußstifte 4 einstückig mit dem MID-Träger ausgebildet und bestehen aus der galvanisch-metallisierbaren Kunststoffkomponente. Jeder der Anschlußstifte 4 ist somit an seiner Oberfläche zumindest teilweise von einer Metallisierung bedeckt und über metallisierte Bereiche 5 mit den elektronischen Bauteilen 2 in entsprechender Weise verbunden.

An seinem vorderen Ende weist der Zünder eine Pulverkammer 8 auf, in der ein Zündwiderstand 7 angeordnet ist. Die Pulverkammer ist mit einem zündfähigen Pulver (nicht dargestellt in den Figuren) befüllt und wird an ihrer Vorderseite über eine Membran 9 verschlossen. Ein unterer Teil 10 der Seitenwandung sowie die Rückwand 11 der Pulverkammer werden vom MID-Träger gebildet. In einem vom MID-Träger gebildeten Bereich der Wandung der Pulverkammer ist der Zündwiderstand 7 angeordnet und über metallisierte Bereiche 5 mit den elektronischen Bauteilen 2 in entsprechender Weise verbunden.

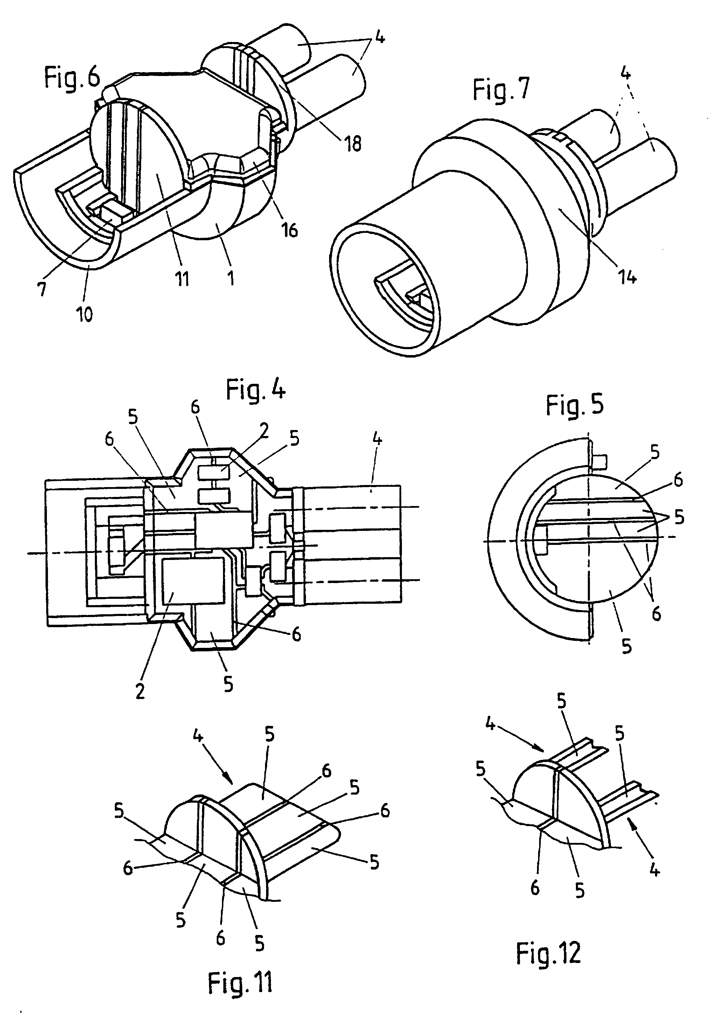

Nach der Herstellung des MID-Trägers mit seinen metallisierten Bereichen 5 und dem Aufbringen der elektronischen Bauteile 2 auf den MID-Träger werden die elektronischen Bauteile in eine Vergußmasse 16 eingebettet, wie dies in Fig. 6 dargestellt ist. In der Folge wird der soweit fertiggestellte Zünder wieder in eine Spritzform eingebracht und mit einer weiteren Kunststoffkomponente umspritzt, worauf er die in Fig. 7 dargestellte Form annimmt. Zur Fertigstellung des Zünders wird Zündpulver in die Pulverkammer 8 eingefüllt und die Pulverkammer an ihrer Vorderseite mit der Membran 9 verschlossen (vgl. Fig. 8).

Der Verschluß der Pulverkammer an der Vorderseite kann weiters auch durch eine Kappe oder durch einen aufgebrachten Schutzlack realisiert sein. Außerdem kann als in die Pulverkammer einzubringendes pyrotechnisches Material auch ein zunächst flüssiges, aus zwei miteinander zu mischenden Komponenten gebildetes pyrotechnisches Material verwendet werden, welches in der Folge aushärtet. Ein zusätzlicher vorderer Verschluß der Pulverkammer kann dabei ganz entfallen. Das ausgehärtete pyrotechnische Material ist feuchtigkeitsresistent. Derartige aushärtbare pyrotechnische Materialien sind bekannt. Auch andere pyrotechnische Materialien unterschiedlicher Konsistenz sind hier einsetzbar.

Der erfindungsgemäße Zünder kann weiters mit einer Wärmeleiteinrichtung 3 ausgestattet sein. Eine solche Wärmeleiteinrichtung 3 dient zur Erhöhung der Transportsicherheit des Zünders. Sollte es während des Transportes des Zünders zu einem Feuerunfall kommen, könnte der Fall eintreten, daß der Zünder zunächst an seiner Rückseite erhitzt wird. Ohne eine derartige Wärmeleiteinrichtung 3 könnte der Träger des Zünders durch seine Erhitzung derart instabil werden, daß, wenn schließlich die Zündung des Pulvers in der Pulverkammer 8 eintritt, Teile des Gehäuses weggeschleudert werden könnten. Bei dem in Fig. 1 dargestellten Längsschnitt ist als Wärmeleiteinrichtung ein vom Bereich des rückseitigen Endes des Zünders bis in die Pulverkammer reichender Metallstift vorgesehen. Zusätzlich oder statt dessen könnte wie in den Fig. 2 bis 5 dargestellt eine großflächige Metallisierung der Oberfläche des MID-Trägers vorgesehen sein.

Unter großflächiger Metallisierung wird hier verstanden, daß die metallisierten Bereiche 5 der Oberfläche des MID-Trägers 1 eine wesentlich größere Fläche einnehmen als die dazwischen liegenden isolierenden Bereiche 6. Diese großflächig ausgebildeten metallisierten Bereiche 5 führen zu einer bedeutenden Erhöhung der Wärmeleitfähigkeit vom rückseitigen Bereich des Zünders in die Pulverkammer 8. Um die Wärmeleitfähigkeit weiter zu erhöhen, könnte ein sich vom rückseitigen Bereich des Zünders bis in die Pulverkammer erstreckender durchgehender metallisierter Bereich vorgesehen sein.

Bei dem in Fig. 9 dargestellten weiteren Ausführungsbeispiel der Erfindung ist anstelle einer Pulverkammer 8 eine herkömmliche Zündpille 12 vorgesehen. Deren Anschlußdrähte 13 sind mit metallisierten Bereichen an der Oberfläche des MID-Trägers 1 verbunden. Die Umspritzung 14 mit der weiteren Kunststoffkomponente umgibt hier auch den rückseitigen Bereich der Zündpille 12. Eine Wärmeleiteinrichtung 3 in Form eines Metallstiftes erstreckt sich vom Bereich des rückseitigen Endes des Zünders bis zu einem Anschlußdraht 13 der Zündpille 12, mit dem er in Verbindung steht.

Das in Fig. 10 dargestellte Ausführungsbeispiel entspricht dem Ausführungsbeispiel nach Fig. 1, wobei aber die die elektronischen Bauteile umgebende Vergußmasse 16 weggelassen wurde. Dies gelingt ohne eine Beschädigung der elektronischen Bauteile bei der Umspritzung durch die Anwendung eines Spritzgußverfahrens mit relativ niedrigen Temperaturen und Drücken. Ein solches ist insbesondere bei Kunststoffweichkomponenten 15 anwendbar, weiche hier als weitere Kunststoffkomponente auf den MID-Träger aufgespritzt wurde. Mit dieser Kunststoffweichkomponente wird eine Wulst 17 ausgebildet, welche den Zünder entlang des äußeren Umfangs umgibt und als Dichtung wirkt, wenn der Zünder in einen zylindrischen Anschlußstutzen einer Antriebsvorrichtung für ein Rückhaltemittel in einem Kraftfahrzeug eingeführt wird. Durch diese Dichtung wird ein Eindringen von Feuchtigkeit in die vom Zünder auszulösende Treibladung der Antriebsvorrichtung verhindert.

Die insbesondere aus den Fig. 2 bis 5 ersichtliche großflächige Metallisierung dient weiters als Feuchtigkeitsschutz, um ein Eindringen von Feuchtigkeit in die Pulverkammer 8 weitgehend zu verhindern. Ein solches Eindringen von Feuchtigkeit kann ohne die Anwendung einer großflächigen Metallisierung dadurch zustandekommen, daß Feuchtigkeit vom Kunststoff aufgenommen und wieder ausdiffundiert wird. Eine oberflächliche Metallisierung des Kunststoffes verhindert jedoch die Aufnahme und das Ausdampfen von Feuchtigkeit. Insbesondere die großflächige Metallisierung der Rückwand 11 der Pulverkammer 8 sowie die großflächige Metallisierung der Rückwand 18 des MID-Trägers, an der die Anschlußstifte angeordnet sind, verhindern zu einem hohen Grad eine Diffusion von Feuchtigkeit in Längsrichtung des Zünders.

In den Fig. 11 und 12 sind weitere Ausführungsformen der am rückseitigen Ende des MID-Trägers einstückig mit dem MID-Träger ausgebildeten Anschlußstifte dargestellt. Bei der in Fig. 11 dargestellten Ausführungsform ist ein einzelner Anschlußstift 4 vorgesehen, der mehrere metallisierte Bereiche 5 mit jeweils dazwischenliegenden isolierenden Bereichen 6 aufweist. Diese mit den elektronischen Bauteilen 2 entsprechend in Verbindung stehenden metallisierten Bereiche 5 sind über einen auf den Anschlußstift 4 aufsteckbaren, mit entsprechenden Kontaktfedem versehenen Anschlußstecker kontaktierbar.

Bei dem in Fig. 12 dargestellten Ausführungsbeispiel sind die Anschlußstifte 4 trogartig ausgebildet, wobei in der trogförmigen Vertiefung der Anschlußstifte 4 jeweils metallisierte Bereiche 5 ausgebildet sind. In diese trogartigen Bereiche der Anschlußstifte 4 können Anschlußdrähte eingelötet werden, die an ihren gegenüberliegenden freien Enden wiederum mit entsprechenden Steckern versehen sind. Bei der Umspritzung des MID-Trägers mit der weiteren Kunststoffkomponente werden hier die trogartigen Anschlußstifte 4 mit den eingelöteten Anschlußdrähten 13 günstigerweise mitumspritzt.

Anstelle der Umspritzung 14 des MID-Trägers mit der weiteren Kunststoffkomponente könnte auch ein Gehäusedeckel auf dem MID-Träger angeordnet werden, der gegebenenfalls vergossen sein kann.

Anstelle der beschriebenen Art der Herstellung des MID-Trägers könnte auch ein über eine andere bekannte Technik hergestellter MID-Träger verwendet werden.

### Legende zu den Hinweisziffern:

- 1: MID-Träger
- 2: elektronischer Bauteil
- 3: Wärmeleiteinrichtung
- 4: Anschlußstift
- 5: metallisierter Bereich
- 6: isolierender Bereich
- 7: Zündwiderstand
- 8: Pulverkammer
- 9: Membran
- 10: Teil der Seitenwandung
- 11: Rückwand
- 12: Zündpille
- 13: Anschlußdraht
- 14: Umspritzung
- 15: Kunststoffweichkomponente
- 16: Vergußmasse
- 17: Wulst
- 18: Rückwand

## Patentansprüche

1. Zünder zum Auslösen eines Rückhaltemittels, insbesondere eines Gurtstraffers oder Airbags, in einem Kraftfahrzeug, der im Bereich seines vorderen Endes eine Anzündeinrichtung wie eine Zündpille oder einen in einer mit Pulver befüllten Pulverkammer angeordneten Zündwiderstand sowie elektronische Bauteile umfaßt, die auf einem MID-Träger angeordnet sind, **dadurch gekennzeichnet, dass** der MID-Träger (1) zumindest einen aus einer galvanisch metallisierbaren Kunststoffkomponente bestehenden und einstückig mit dem MID-Träger (1) ausgebildeten Anschlußstift (4) aufweist, der zur Kontaktierung der elektronischen Bauteile (2) mit mindestens einem metallisierten Bereich (5) versehen ist.

2. Zünder nach Anspruch 1, **dadurch gekennzeichnet, dass** zwei einstückig mit dem MID-Träger (1) ausgebildete Anschlußstifte (4) vorgesehen sind, die jeweils mit einem metallisierten Bereich (5) versehen sind.

3. Zünder nach Anspruch 1, **dadurch gekennzeichnet, dass** ein einzelner Anschlußstift (4) vorgesehen ist, der zwei oder mehrere jeweils durch isolierende Bereiche (6) voneinander getrennte metallisierte Bereiche (5) zur Kontaktierung der elektronischen Bauteile (2) des Zünders aufweist.

4. Zünder nach Anspruch 1, **dadurch gekennzeichnet, dass** zumindest ein Teil (10, 11 ) der Wandung der Pulverkammer (8) einstückig mit dem MID-Träger (1) ausgebildet ist.

5. Zünder nach Anspruch 1, **dadurch gekennzeichnet, dass** an den mit den elektronischen Bauteilen (2) versehenen MID-Träger (1) eine weitere Kunststoffkomponente angespritzt ist.

6. Zünder nach Anspruch 5, **dadurch gekennzeichnet, dass** die elektronischen Bauteile von der weiteren Kunststoffkomponente durch eine Vergußmasse (16) getrennt sind.

7. Zünder nach Anspruch 5, **dadurch gekennzeichnet, dass** die weitere Kunststoffkomponente eine Kunststoffweichkomponente (15) ist, von der eine eine Dichtung darstellende, um die Außenseite des Zünders ringförmig umlaufende Wulst (17) gebildet wird.

8. Zünder nach Anspruch 1, **dadurch gekennzeichnet, dass** die Fläche der metallisierten Bereiche (5) des MID-Trägers wesentlich größer als die Fläche der dazwischenliegenden isolierenden Bereiche (6) ist.

9. Zünder nach Anspruch 1, **dadurch gekennzeichnet, dass** der MID-Träger (1) die vorzugsweise scheibenförmig ausgebildete Rückwand (11 ) der Pulverkammer (8) bildet, deren der Pulverkammer (8) zugewandte und/oder der Pulverkammer abgewandte Oberfläche zum Großteil, vorzugsweise zu mehr als 80 %, mit einem metallisierten Bereich (5) versehen ist.

10. Zünder nach Anspruch 1, **dadurch gekennzeichnet, dass** die metallisierten Bereiche (5) in an sich bekannter Weise galvanisch metallisiert sind.

## Claims

1. An igniter for triggering a restraining means, in particular a belt tensioning means or air bag, in a motor vehicle, this igniter including in the region of its front end an ignition device such as an igniter capsule or an ignition resistor, arranged in a powder chamber filled with powder, and electronic components which are arranged on an MID carrier, **characterised in that** the MID carrier (1) has at least one connection pin (4) which is made from a synthetic component that can be metallised by electroplating, is constructed in one piece with the MID carrier (1) and is provided with at least one metallised region (5) for the purpose of making contact with the electronic components (2).

2. An igniter according to Claim 1, **characterised in that** two connection pins (4) constructed in one piece with the MID carrier (1) are provided and are each equipped with a metallised region (5).

3. An igniter according to Claim 1, **characterised in that** a single connection pin (4) is provided which has two or more metallised regions (5) each separated from one another by insulating regions (6), for the purpose of making contact with the electronic components (2) of the igniter.

4. An igniter according to Claim 1, **characterised in that** at least one part (10, 11) of the wall of the powder chamber (8) is constructed in one piece with the MID carrier (1).

5. An igniter according to Claim 1, **characterised in that** a further synthetic component is injection moulded onto the MID carrier (1) provided with the electronic components (2).

6. An igniter according to Claim 5, **characterised in that** the electronic components are separated from the further synthetic component by a casting compound (16).

7. An igniter according to Claim 5, **characterised in that** the further synthetic component is a plasticised synthetic component (15) from which a bead (17) creating a seal and running in annular manner around the periphery of the outside of the igniter is formed.

8. An igniter according to Claim 1, **characterised in that** the surface area of the metallised regions (5) of the MID carrier is substantially larger than the surface area of the insulating regions (6) lying in between.

9. An igniter according to Claim 1, **characterised in that** the MID carrier (1) forms the preferably disc-shaped rear wall (11) of the powder chamber (8) whereof the surface facing the powder chamber (8) and/or the surface remote from the powder chamber is provided to a large extent, preferably more than 80%, with a metallised region (5).

10. An igniter according to Claim 1, **characterised in that** the metallised regions (5) are metallised by electroplating in a manner known per se.

## Revendications

1. Amorce pour déclencher un moyen de retenue, notamment un raidisseur de ceinture ou un coussin gonflable dans un véhicule automobile, ayant au niveau de son extrémité avant une installation d'allumage telle qu'une pastille ou une résistance d'allumage placée dans une chambre à poudre contenant de la poudre, et des composants électroniques installés sur un support MID (1),
**caractérisée en ce que**
le support MID (1) comporte au moins une broche de raccordement (4) en matière plastique métallisée par voie galvanique et faisant corps avec le support MDI (1), ce composant étant muni d'au moins une zone métallisée (5) pour réaliser le contact avec les composants électroniques (2).

2. Amorce selon la revendication 1,
**caractérisée par**
deux broches de raccordement (4) faisant corps avec le support MID (1), ces broches étant munies chacune d'une zone métallisée (5).

3. Amorce selon la revendication 1,
**caractérisée par**
une unique broche de raccordement (4) comportant deux ou plusieurs zones (5), métallisées, séparées les unes des autres par des zones isolantes (6) pour réaliser le contact des composants électroniques (2) de l'amorce.

4. Amorce selon la revendication 1,
**caractérisée en ce qu'**
au moins une partie (10, 11) de la paroi de la chambre à poudre (8) est réalisée en une seule pièce avec le support MID (1).

5. Amorce selon la revendication 1,
**caractérisée en ce que**
le support MID (1) muni des composants électroniques (2) comporte un autre composant en matière plastique surinjectée.

6. Amorce selon la revendication 5,
**caractérisée en ce que**
les composants électroniques sont séparés des autres composants en matière plastique par une masse coulée (16).

7. Amorce selon la revendication 5,
**caractérisée en ce que**
l'autre composant en matière plastique est un composant en matière plastique molle (15) qui forme un bourrelet (17) constituant un joint de forme annulaire autour du côté extérieur de l'amorce.

8. Amorce selon la revendication 1,
**caractérisée en ce que**
la surface des zones métallisées (5) du support MID est beaucoup plus grande que la surface des zones (6) intermédiaires, isolantes.

9. Amorce selon la revendication 1,
**caractérisée en ce que**
le support MID (1) est formé de préférence par la paroi arrière (11) en forme de disque de la chambre à poudre (8) et dont la face tournée vers la chambre à poudre (8) et/ou celle opposée à la chambre à poudre est munie en grande partie sur plus de 80 % d'une zone métallisée (5).

10. Amorce selon la revendication 1,
**caractérisée en ce que**
la zone métallisée (5) est métallisée de manière galvanique d'une façon connue en soi.
